# EUROPÄISCHE PATENTSCHRIFT

(11) **EP 1 438 833 B1**
(45) Veröffentlichungstag und Bekanntmachung des Hinweises auf die Patenterteilung: **28.03.2007**
(21) Anmeldenummer: 02790303.8
(22) Anmeldetag: 25.10.2002
(51) Int. Cl.: H04M 3/00

(54) **VORRICHTUNG UND VERFAHREN ZUR MEHRKANALIGEN AKUSTISCHEN ECHOKOMPENSATION MIT VARIABLER KANALZAHL**
DEVICE AND METHOD FOR MULTICHANNEL ACOUSTIC ECHO CANCELLATION WITH A VARIABLE NUMBER OF CHANNELS
DISPOSITIF ET PROCEDE D'ANNULATION D'ECHO ACOUSTIQUE MULTICANAL A NOMBRE DE CANAUX VARIABLE

(30) Priorität: 27.10.2001 DE 10153188
(43) Veröffentlichungstag der Anmeldung: 21.07.2004
(73) Patentinhaber: Grundig Multimedia B.V., 1083HJ Amsterdam (NL)
(72) Erfinder: BUCHNER, Herbert, 93152 Nittendorf (DE); KELLERMANN, Walter, 90542 Eckental (DE)
(74) Vertreter: Pröll, Jürgen
(86) Internationale Anmeldenummer: PCT/EP2002/011934
(87) Internationale Veröffentlichungsnummer: WO 2003/039115

(56) Entgegenhaltungen:
- YENSEN T ET AL: "An acoustic echo cancellation structure for synthetic surround sound" INTERNATIONAL CONFERENCE ON ACOUSTICS, SPEECH, AND SIGNAL PROCESSING;SALT LAKE, UT, UNITED STATES MAY 7-11 2001, Bd. 5, 2001, Seiten 3237-3240, XP002238011 Proceedings
- BENESTY JACOB ET AL: "Synthesized stereo combined with acoustic echo cancellation for desktop conferencing" PROCEEDINGS OF THE 1999 IEEE INTERNATIONAL CONFERENCE ON ACOUSTICS, SPEECH, AND SIGNAL PROCESSING (ICASSP-99);PHOENIX, AZ, USA MAR 15-MAR 19 1999, Bd. 2, 1999, Seiten 853-856, XP000900254 Proceedings 1999 IEEE, Piscataway, NJ, USA
- PATENT ABSTRACTS OF JAPAN vol. 1997, no. 09, 30. September 1997 (1997-09-30) & JP 09 130306 A (TOSHIBA CORP), 16. Mai 1997 (1997-05-16)

## Beschreibung

Die vorliegende Erfindung betrifft eine Vorrichtung und ein Verfahren zur mehrkanaligen akustischen Echokompensation mit variabler Kanalzahl, wie sie insbesondere für akustische Mensch-Maschine-Schnittstellen mit Freisprecheinrichtung und mehrkanaliger Audioausgabe verwendet werden, um eine Mehrkanal-Vollduplex-Kommunikation zu ermöglichen.

Aus Yensen T. et al.: "An acoustic echo cancellation structure for synthetic surround sound" in International Conference on Acoustics, Speech, and Signal Processing; Salt Lake, Ut, United States, May 7-11, 2001, Bd. 5, 2001, Seiten 3237 - 3240, ist eine Struktur offenbart, welche eine Echokompensation für eine Freisprecheinrichtung aufzeigt.

Aus Benesty J. et all.: "Synthesized stereo combined with acoustic echo cancellation for desktop conferencing" in Proceedings of the 1999 IEEE International Conference on Acoustics, Speech, and Signal Processing (ICASSP-99), Phoenix, Az. USA, 15. März 1999, Bd. 2, 1999, Seiten 853 - 856, ist eine Vorrichtung zur Echokompensation, insbesondere zum Einsatz für Konferenzsprachsysteme, offenbart.

Aus JP-A-09 130306 ist eine weitere Vorrichtung zur Echokompensation offenbart.

In dem Übersichtsartikel "Stereophonic Acoustic Echo Cancellation - An Overview of the Fundamental Problem", IEEE Signal Processing Letters, Vol. 2, Nr. 8. August 1995, von M. Mohan Sondhi et. al., ist die Grundproblematik der akustischen Echokompensation ausführlich beschrieben:
Verwendet man bei akustischen Mensch-Maschine-Schnittstellen, wie z.B. Mikrophonen und Lautsprechern bei Videokonferenzsystemen oder Telefonkonferenzsystemen, nur einen einzelnen Vollduplex-Audiokanal für die bidirektionale Sprachübertragung zwischen einer ersten sowie einer zweiten Audio-Sende- und Empfangseinheit, so läßt sich durch die Verwendung adaptiver Filter eine akustische Echokompensation durchführen, um unerwünschte Echos zu unterdrücken, die aus einer Rückkopplung zwischen Lautsprechern und Mikrophonen jeweils in der ersten und der zweiten Audio-Sende- und Empfangseinheit auftreten.

Bei herkömmlichen einkanaligen akustischen Echokompensatoren reicht die Verwendung eines einzelnen FIR-(finite impulse response)-Filters mit adaptiv anpaßbaren Filterkoeffizienten aus, um die akustische lmpulsantwort des Echopfads zu modellieren. Ein von dem adaptiven Filter modelliertes Schätzsignal für das Echo wird sodann von dem tatsächlichen Echosignal abgezogen und es ergibt sich ein Fehlersignal, welches durch permanente adaptive Nachregelung der Filterkoeffizienten permanent an die sich möglicherweise im Lauf der Zeit ändernden Echopfade angepaßt wird, damit das Fehlersignal fortlaufend möglichst klein gehalten wird.

Insbesondere bei Videokonferenz- oder Telefonkonferenzübertragungen kann es aber wünschenswert sein, durch Verwendung mehrerer akustischer Übertragungskanäle mit jeweils mindestens einem zugeordneten Lautsprecher ein möglichst raumtreues Klangbild von einer ersten zu einer zweiten Audio-Sende- und Empfangseinheit zu übertragen. Dies ist z.B. interessant, wenn sich mehrere Sprecher in einem ersten Raum befinden, von dem Sprechschall zu einem Empfänger in einem zweiten Raum übertragen werden soll. Verwendet man dabei zwei oder mehr akustische Übertragungskanäle zu einem zweiten Raum, wo sich ein Zuhörer befindet, so erhält dieser ein Stereo- bzw. Multikanalklangbild aus dem ersten Raum, was ihm z.B. die Zuordnung des Sprechschalls zu den einzelnen Sprechern erleichtert.

Wie neben dem obengenannten Übersichtsartikel z.B. auch in "Stereo Projection Echo Canceller with True Echo Path Estimation", Proc. IEEE International Conference on Acoustics, Speech and Signal Processing (ICASSP 95), Detroit, MI, USA, S. 3059-3062, Mai 1995, von S. Shimauchi et al. oder "A better understanding and an improved solution to the problems of stereophonic acoustic echo cancellation", Proc. IEEE International Conference on Acoustics, Speech, and Signal Processing (ICASSP 97), München, S. 303 - 306, April 1997 von J. Benesty et. al. erläutert, treten bei der Stereo- oder Multikanal-Echokompensation jedoch aufgrund der wechselseitigen Beeinflussung der einzelnen Übertragungskanäle untereinander eine Reihe von zusätzlichen Problemen gegenüber der Monokanalsituation auf, wo ein einzelnes adaptives Filter für die Echokompensation ausreicht.

Verschiedene Lösungsansätze für im Mehrkanalfall auftretende Probleme sind insbesondere in dem Artikel "Stereophonic Acoustic Echo Cancellation - An Overview and Recent Solutions"; Proc. 6^{th} Int. Workshop on Acoustic Echo and Noise Control, Pocono Manor, PA, USA, S. 12-19, September 1999 von S. Makino et. al. erläutert. Im einzelnen handelt es sich dabei um: Hinzufügung von statistisch unabhängigen Rauschsignalen zu den Lautsprechersignalen nichtlineare Signalverarbeitung; die Verwendung von Dekorrelationsfiltern, die Verwendung verschiedener zeitvariabler Filtertechniken und die Verwendung spezieller adaptiver Algorithmen in den Filtern.

Insbesondere ist im Mehrkanalfall nach heutigem Kenntnisstand eine Signalverabeitung zur teilweisen (nicht wahrnehmbaren) Dekorrelation der Lautsprechersignale nötig, um eine eindeutige Konvergenz von adaptiven Filtern zu den wahren Raumimpulsantworten zu ermöglichen.
Wie bereits ausgeführt, besteht die Grundidee der Echokompensation darin, Echopfade, die sich durch das Zusammenspiel von bestimmten Lautsprechercharakteristiken, einer bestimmten Raumakustik und einer bestimmten Mikrophoncharakteristik ergeben, mit digitalen Filterstrukturen nachzubilden.

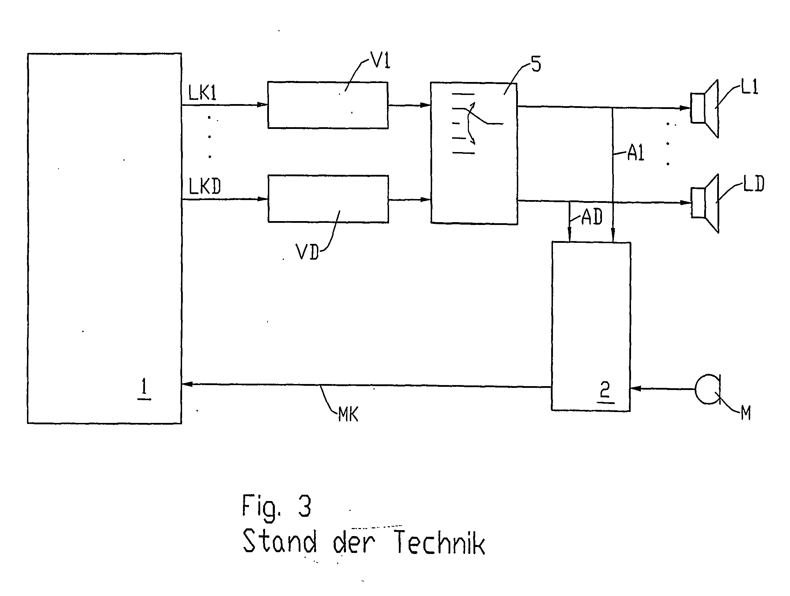

Dies soll im folgenden anhand Fig. 3 eingehender erläutert werden: Bei der dort gezeigen Echokompensationsvorrichtung nach dem Stand der Technik werden von einer Mehrkanal-Audiosignalverarbeitungseinheit 1 ausgegebene Audiosignale über getrennte Lautsprecherkanäle LK1, ...., LKD auf zugeordnete Lautsprecher L1, ...., LD gegeben. Auf jeder Laufstrecke der Lautsprecherkanäle LK1, ...., LKD befindet sich jeweils eine kanalspezifische Vorverarbeitungseinheit V1, ...., VD. Die über die Vorverarbeitungseinheiten V1, ...., VD laufenden Audiosignale können dort jeweils individuell kanalspezifisch verzerrt werden.

Die den Lautsprecherkanälen LK1, ...., LKD jeweils individuell zugeordneten Lautsprecher L1, ..., LD strahlen den eingehenden Audiosignalen entsprechende akustische Signale in den umgebenden Raum ab.

Weiter ist ein Mikrophon M vorgesehen, welches als Eingabeschnittstelle für akustische Signale dient, wie z.B. Sprechgeräusche von einer in das Mikrophon sprechenden Person.

Das Mikrophon M setzt die eingehenden akustischen Signale in Mikrophonsignale um, die zur weiteren Verarbeitung zur Mehrkanal-Audiosignalverarbeitungseinheit 1 über einen Mikrophonkanal MK zurückgegeben werden.

Die von den Lautsprechern L1, ..., LD abgestrahlten akustischen Signale überlagern sich in Abhängigkeit von den Strukturen des Raumes, in dem die Lautsprecher L1, ..., LD aufgestellt sind, und werden ebenfalls von dem Mikrophon M eingefangen.

Dadurch kommt es zu Echosignalen, weil die von den Lautsprechern L1, ..., LD abgestrahlten akustischen Signale von dem Mikrophon M eingefangen und von dort auf die Mehrkanal-Audiosignalverarbeitungseinheit 1 gegeben werden, von wo sie unter Umständen abermals auf die Lautsprecher L1, ..., LD gegeben werden.

Die Grundidee der Echokompensation ist es, die sich aus dem Zusammenspiel der von den Lautsprechern L1, ..., LD abgestrahlten akustischen Signale und deren sich durch die räumlichen Ausbreitungsbedingungen vorgegebenen unterschiedlichen Laufwege zum Mikrophon M und den Mikrophoncharakteristika ergebenden "Echopfade" durch digitale Filterstrukturen zu kompensieren. Dies geschieht dadurch, dass solche digitalen Filterstrukturen Schätzsignale für die durch die Echopfade zu erwartenden Echosignale erzeugen und die Schätzsignale vom Mikrophonsignal substrahiert werden, welches die tatsächlichen Echosignale enthält.

Bei exakter Übereinstimmung der realen Raumimpulsantworten mit den Impulsantworten der digitalen Filter würden die Echosignale im Mikrophonsignal ausgelöscht.

Da die Echopfade im allgemeinen eine sehr komplexe, nicht von vornherein bekannte und sich zudem in der Regel zeitlich veränderbare Struktur aufweisen, müssen die Echopfade laufend neu, d.h. adaptiv identifiziert werden.

Dazu dient das in Fig. 3 gezeigte adaptive Filter 2: Diesem werden die über die Kanäle LK1, ..., LKD auf die Lautsprecher L1, ..., LD gegebenen Audiosignale. über Abzweigleitungen A1, ..., AD zugeführt. Im adaptiven Filter 2 werden die über die Abzweigleitungen A1, ..., AD zugeführten Audiosignale nach bestimmten Adaptionsalgorithmen mit zu optimierenden Gewichtungskoeffizienten (Filterkoeffizienten) überlagert. Die adaptive Anpassung beruht dabei auf mathematischen Modellen, die eine Anpassung der temporär gültigen Filterkoeffizienten an die temporär geltenden Echopfadbedingungen vorsehen.

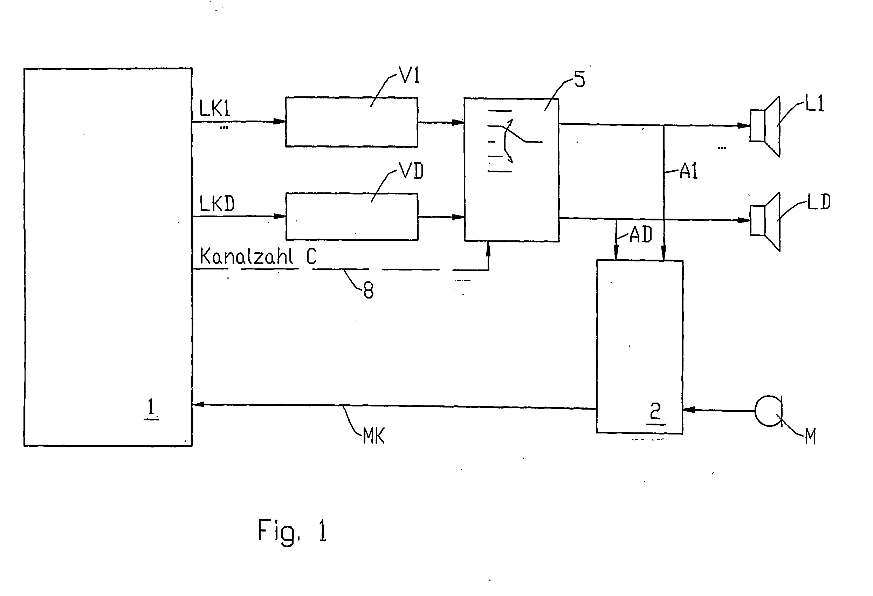

Um im Mehrkanalfall eine eindeutige Konvergenz der Filterkoeffizienten zu den wahren Raumimpulsantworten zu ermöglichen, wird die nach heutigem Kenntnisstand (vgl. z.B. den oben genannten Artikel von J. Benesty et. al.) notwendige Signalvorverarbeitung zur teilweisen (akustisch nicht wahrnehmbaren) Dekorrelation der Lautsprechersignale in den in Fig. 1 gezeigten Vorverarbeitungseinheiten V1, ..., VD durchgeführt.

Es kann jedoch theoretisch und experimentell gezeigt werden, dass trotz dieser Vorverarbeitung der Aufwand für die Echokompensation mit zunehmender Kanalzahl im allgemeinen zunimmt und das Konvergenzverhalten der im adaptiven Filter zu überlagernden Einzelkanalsignale schlechter wird. Werden D unterschiedliche Vorverarbeitungseinheiten eingesetzt, so führt dies zu sehr langsamer Konvergenz der Filterkoeffizienten, wenn die tatsächliche Kanalzahl C des Audiosignals kleiner ist als die tatsächliche Kanalzahl D, also C < D. Dieser Fall ist typisch für den Einsatz bei Multimedia-Endgeräten (z.B., wenn ein Multimedia-Endgerät als Stereo-Fernsehgerät verwendet wird, mit dem eine Sendung angesehen wird, bei der der Ton nur mit einem Monokanal aufgezeichnet ist).

Die Durchführung einer mehrkanaligen Echokompensation für akustische Schnittstellen bei Multimedia-Endgeräten ist eine relativ neue Anwendung. Konventionelle Ansätze für Telefonkonferenzanwendungen sehen eine feste Kanalzahl D für die Audiosignale vor.

Das relativ langsame Konvergenzverhalten entsteht in diesem Fall durch die unzureichende Dekorrelation von ursprünglich exakt gleichen Audiosignalen, die über getrennte Audiokanäle geführt werden.

Ein aus dem bereits oben als Stand der Technik zitierten Artikel von J. Benesty et. al. bekannter Lösungsansatz sieht D gleiche nichtlineare Vorverarbeitungseinheiten vor, wodurch das genannte Problem abgeschwächt wird. Allerdings werden damit auch die Dekorrelationsmöglichkeiten eingeschränkt, insbesondere, wenn sich die Signale der einzelnen Kanäle vorwiegend in ihren Pegeln unterscheiden (z.B. bei Intensitätsstereophonie).

Aufgabe der vorliegenden Erfindung ist es deshalb, die Nachteile der aus dem Stand der Technik bekannten Vorrichtungen zur mehrkanaligen akustischen Echokompensation mit variabler Kanalzahl zu überwinden.

Insbesondere ist es Aufgabe der vorliegenden Erfindung, eine Vorrichtung zur mehrkanaligen akustischen Echokompensation mit variabler Kanalzahl für den Fall bereitzustellen, bei der die tatsächlich benutzte Kanalzahl C kleiner ist als die Anzahl D der tatsächlich vorhandenen Kanäle, und wobei die aus dem Stand der Technik in Verbindung mit der Dekorrelation auftretenden Probleme vermieden werden.

Weiterhin ist eine Aufgabe der vorliegenden Erfindung, Verfahren zur mehrkanaligen Echokompensation für den Fall bereitzustellen, dass die benutzte Kanalzahl C kleiner ist als die Anzahl D der tatsächlich vorhandenen Kanäle.

Erfindungsgemäß werden diese Aufgaben durch eine Vorrichtung nach Anspruch 1 sowie ein Verfahren nach Anspruch 5 gelöst. Die abhängigen Ansprüche betreffen vorteilhafte Ausführungsformen der vorliegenden Erfindung.

Der erfindungsgemäße Ansatz zur Echokompensation bei der Wiedergabe von C-kanaligen Audiosignalen auf einem D-Kanalsystem (C<D) nutzt die Tatsache aus, dass die Kanalzahl des Audiosignals bekannt ist (z.B. beim Vorliegen von Stereoinformationen in einem Fernsehsignal). Es ist daher möglich, nur die C<D tatsächlich benutzten Audiokanäle durch unabhängig arbeitende Vorverarbeitungseinheiten zu dekorrelieren. Die verbleibenden D-C Lautsprechersignale werden dann lediglich mit einem der C tatsächlich benutzten Audiokanäle kombiniert (z.B. werden im Monofall die beiden Lautsprechersignale mit dem Kanal 1 eines Stereosystems verbunden).

Die Vorteile und Merkmale der vorliegenden Erfindung ergeben sich auch aus der nachfolgenden Erläuterung von bevorzugten Ausführungsbeispielen in Verbindung mit den Zeichnungen.

Es zeigen:
- Fig. 1: eine schematische Darstellung einer ersten Ausführungsform einer erfindungsgemäßen Vorrichtung zur mehrkanaligen Echokompensation;
- Fig. 2: eine schematische Darstellung einer zweiten Ausführungsform einer erfindungsgemäßen Vorrichtung zur mehrkanaligen Echokompensation;
- Fig. 3: eine schematische Darstellung einer bekannten Vorrichtung zur mehrkanaligen Echokompensation nach dem Stand der Technik.

Nachfolgend wird eine erste Ausführungsform einer erfindungsgemäßen Vorrichtung zur Echokompensation beispielhaft anhand der Fig. 1 erläutert.

Darin sind Elemente, die bereits in Verbindung mit dem Stand der Technik nach Fig. 3 erläutert worden sind, mit identischen Bezugszeichen wie in Fig. 3 versehen und werden im folgenden nicht eingehender erläutert.

Zusätzlich zu den in Fig. 3 gezeigten Elementen weist die in Fig. 1 gezeigte erste Ausführungsform einer erfindungsgemäßen Vorrichtung noch eine Kanalkombiniervorrichtung 5 auf, welche zwischen den D Vorverarbeitungseinheiten V1, ..., VD und den zum adaptiven Filter 2 führenden Abzweigleitungen A1, ..., AD vorgesehen ist.

Weiterhin ist eine Datenleitung 8 zwischen der Mehrkanal-Audiosignalverarbeitungseinheit 1 und der Kanalkombiniervorrichtung 5 vorgesehen. Über die Datenleitung 8 übermittelt die Mehrkanal-Audiosignalverarbeitungseinheit 1 an die Kanalkombiniervorrichtung 5 die Zahl C der tatsächlich zu verwendenden Kanäle, welche kleiner sein kann, als die Zahl D der insgesamt tatsächlich vorhandenen Kanäle.

Mittels der Kanalkombiniervorrichtung 5 werden jeweils mehrere Lautsprecher, die genau dieselben Audiosignale erhalten sollen, mit einer einzelnen gemeinsamen Zuleitung verbunden, und zwar nach Maßgabe der von der Mehrkanal-Audiosignalverarbeitungseinheit 1 an die Kanalkombiniervorrichtung 5 übermittelten Zahl C von tatsächlich zu benutzenden Kanälen. Durch die Kanalkombiniervorrichtung 5 werden dann die nicht benötigten D-C Vorverarbeitungseinheiten von den Lautsprechern entkoppelt. Im allgemeinsten Fall wird dies durch einfaches Verbinden von jeweils mehreren Lautsprechern mit einer Zuleitung in der Kanalkombiniervorrichtung 5 erreicht. Damit werden die nicht benötigten D-C Vorverarbeitungseinheiten von den Lautsprechern entkoppelt.
Mit anderen Worten:
Über die D Lautsprecherkanäle LK1, ..., LKD von der Mehrkanal-Audiosignalverarbeitungsanlage 1 eingehende Lautsprecherkanalsignale LS1, ..., LSD werden in der Kanalkombiniervorrichtung 5 durch Überlagern einzelner Lautsprechersignale miteinander so kombiniert, dass am Ausgang der Kanalkombiniervorrichtung nur noch C<D eigenständige Ausgabesignale vorliegen.
Dies sei an folgendem Beispiel erläutert: Im Falle einer Reduktion von sieben eingehenden Lautsprecherkanalsignalen LS1, LS2, LS3, LS4, LS5, LS6, LS7 auf vier Signale LS1, LS23, LS4, LS567 werden die eingehenden Lautsprecherkanalsignale LS1 und LS4 unverändert gelassen, wohingegen die Lautsprecherkanalsignale LS2 und LS3 zu einem Signal LS23 kombiniert werden und die Lautsprecherkanalsignale LS5, LS6 und LS7 zu einem Signal LS567. Diese vier ausgehenden Signale LS1, LS23, LS4 und LS567 können dann z.B. wieder auf die in diesem Falle vorgesehenen sieben Lautsprecher wie folgt gegeben werden:
   LS1 auf L1, LS23 auf L2 und auf L3, LS4 auf L4, LS567 auf L5, L6 und L7.

Mit den erfindungsgemäßen Maßnahmen werden die zusätzlichen Konvergenzprobleme der Filterkoeffizienten vermieden, die sich bei der konventionellen mehrkanaligen Echokompensation mit Lautsprechersignalen bei reduzierter Kanalzahl ergeben.

Bei Verwendung einer erfindungsgemäßen Vorrichtung zur Mehrkanal-Echokompensation, bei der mittels einer Kanalkombiniervorrichtung nur C<D Audiokanäle tatsächlich benutzt werden, kann also mit einem D-kanaligen Echokompensator (D>C) eine mit einem herkömmlichen, nur C-kanaligen Echokompensator vergleichbare Leistungsfähigkeit erreicht werden. Dies alles ist bei einem äußerst geringen Zusatzaufwand möglich, nämlich der Bereitstellung der besagten Kanalkombinationsvorrichtung 5.

Der erfindungsgemäße Ansatz ist dabei unabhängig vom tatsächich eingesetzten Adaptionsalgorithmus, der tatsächlich eingesetzten Vorverarbeitungsmethode und der Kanalzahl D des Systems.

Zur Echokompensation bei C Kanälen werden in einer erfindungsgemäßen Vorrichtung maximal C der tatsächlich vorhandenden D Vorverarbeitungseinheiten eingesetzt.

Zur Erzielung maximaler Effizienz sollten dabei genau C unterschiedliche Vorverarbeitungseinheiten eingesetzt werden.

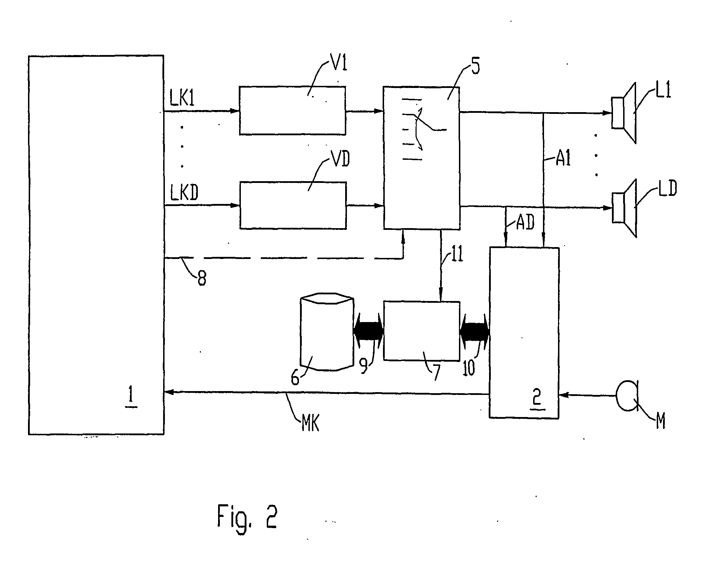

Eine zweite Ausführungsform der erfindungsgemäßen Vorrichtung zur Echokompensation wird anhand der Fig. 2 näher erläutert.
Bei dieser Ausführungsform sind die in Fig. 1 gezeigten Elemente ergänzt um einen Zwischenpuffer 6 sowie eine Transferlogik 7. Der Zwischenpuffer 6 steht über eine bidirektionale Busleitung 9 mit einer Transferlogik 7 in Verbindung, und diese wiederum über eine bidirektionale Busleitung 10 mit dem adaptiven Filter 2. Zusätzlich steht die Transferlogik 7 über eine unidirektionale Busleitung 11 mit der Kanalkombiniervorrichtung 5 in Verbindung.

Der Zwischenpuffer 6 dient zur Speicherung geschätzter Impulsantworten, die von dem adaptiven Filter 2 vorab ermittelt worden sind und von dieser über die bidirektionale Busleitung 10 in die Transferlogik 7 und von dort über die bidirektionale Busleitung 9 in den Zwischenpuffer 6 transportiert worden sind.

Bei einem System mit D Lautsprecherkanälen und einem adaptiven Filter 2, in dem für jeden Lautsprecherkanal eine Anzahl L von Filterkoeffizienten vorgesehen ist, muß in dem Zwischenpuffer 6 genügend Speicherplatz vorhanden sein, um für die maximal benutzte Anzahl von D Kanälen jeweils L Filterkoeffizienten ablegen zu können, d.h. es muß die Möglichkeit bestehen, D L geschätzte Filterkoeffizienten abzulegen.

Über die Busleitung 11 erhält die Transferlogik 7 von der Kanalkombinationsvorrichtung 5 die Indizes der aktuell benutzten Kanäle, deren Zahl kleiner oder gleich der Zahl D der tatsächlich zur Verfügung stehenden Kanäle ist.

Der Sinn einer solchen Zwischenspeicherung von geschätzten Impulsantworten (Filterkoeffizienten) ist folgender: wechselt man von einer während einer Betriebsphase a ursprünglich benutzten Anzahl von Kanälen X auf eine davon verschiedene und während einer Betriebsphase b benutzte Anzahl Y von Kanälen und dann wieder während einer anschließenden Betriebsphase c zurück auf die Anzahl X von Kanälen, so soll zu Beginn der Betriebsphase c auf die zum Ende der Betriebsphase A bereits verwendeten Filterkoeffizienten zurückgegriffen werden können, als Startwerte für eine aufgrund von zwischenzeitlich eventuell stattgefundenen Änderungen in der Raumakustik notwendige erneute Anpassungen.

Um diese Vorgehensweise besser verständlich zu machen, sei beispielhaft folgendes Szenario diskutiert: Bei einem Multimedia-Femseh-System mit 5-Kanal-Dolby-Surround-Tonanlage werden bestimmte Fernsehsendungen (z.B. Spielfilme) mit 5-Kanalton empfangen. Andere Fernsehsendungen (z.B. Werbung oder Nachrichtensendungen) werden z.B. jedoch nur mit 2-Kanalton oder gar nur mit 1-Kanalton (Mono) empfangen. Die reduzierte Anzahl von Tonkanälen wird dann gleichwohl über die 5-Kanal-Dolby-Surround-Tonanlage wiedergegeben. Dies geschieht, wie oben erläutert, durch die Kombination einzelner Lautsprecherkanalsignale zu Kombinationssignalen.

Betrachtet ein Zuschauer nun zunächst z.B. eine Fernsehsendung mit 5-Kanalton, so kommt es bei der Verwendung einer erfindungsgemäßen Vorrichtung und eines erfindungsgemäßen Verfahrens zur mehrkanaligen Echokompensation bei gegebenen raumakustischen Bedingungen zu einer Ermittlung bestimmter Filterkoeffizienten in dem in Fig. 2 gezeigten adaptiven Filter 2. Schaltet der Zuschauer nun z.B. von der gerade betrachteten Fernsehsendung mit 5-Kanalton auf eine andere Fernsehsendung mit 2-Kanalton (Stereoton) um, so muß für die aus der Kanalkombinationsvorrichtung 5 ausgegebenen Signale erneut eine adaptive Anpassung durchgeführt werden, d.h. es müssen in dem adaptiven Filter 2 neue Filterkoeffizienten für den 2-Kanalfall berechnet werden. Schaltet der Zuschauer dann wieder zu der ursprünglich betrachteten Fernsehsendung mit 5-Kanalton zurück, so ist eine erneute Einstellung des adaptiven Filters für den 5-Kanalfall notwendig. Falls sich die raumakustischen Verhältnisse in der Zwischenzeit nicht geändert haben sollten, so wird das adaptive Filter 2 nunmehr für den 5-Kanalfall wiederum dieselben Filterkoeffizienten ermitteln, die bereits vor dem Umschalten von der 5-Kanaltonsendung auf die 2-Kanaltonsendung vorlagen. Um die mehr oder minder lange Zeitspanne einzusparen, die das adaptive Filter braucht, um wieder zu für den 5-Kanalfall passenden Filterkoeffizienten zu konvergieren, kann man mittels der Maßnahmen nach Anspruch 6 einfach auf die vor dem Umschalten von der 5-Kanalsendung auf die 2-Kanalsendung abgespeicherten, bei konstanten raumakustischen Verhältnissen nach wie vor passenden Filterkoeffizienten zurückgreifen, die in dem Zwischenpuffer 6 zwischengespeichert worden sind.

Auch wenn es in der Zeitspanne bis zum erneuten Zurückschalten auf die 5-Kanalsendung zu einer Änderung der raumakustischen Verhältnisse gekommen sein sollte (z.B. weil Personen den Raum verlassen oder betreten haben), ist in der Praxis davon auszugehen, dass diese Änderungen so geringfüg sind, dass die in der Zwischenzeit im Zwischenpuffer 6 zwischengespeicherten Filterkoeffizienten immer noch relativ gut zu den neuen raumakustischen Verhältnissen passen und damit sehr gute Startwerte für einen erneuten Adaptionsvorgang des adaptiven Filters 2 sind, so dass aufgrund der vorgegebenen Startwerte der für das Erreichen eines Konvergenzustands der Filterkoeffizienten benötigte Zeitraum im Regelfall deutlich kürzer ist, als wenn das adaptive Filter mit willkürlichen Startwerten eine komplette Neuberechnung der adaptiven Filterkoeffizienten für den 5-Kanaltonfall bei geänderten raumakustischen Bedingungen durchführen müßte.

Dieses Verfahren der Zwischenspeicherung von vorab ermittelten Filterkoeffizienten ist natürlich auch dann sinnvoll, wenn zunächst von einer kleineren Zahl benutzter Audiokanäle (z.B. 2) auf eine größere Anzahl benutzter Audiokanäle (z.B. 5) umgeschaltet wird, und dann wieder zurückgeschaltet wird auf die ursprüngliche kleinere Anzahl.

Für die Kompensationseinheit wird auch bei nur C < D unabhängigen Audiokanälen ein D-kanaliges adaptives Filter verwendet, da die Rechenleistung ohnehin für D Kanäle dimensioniert sein muß, um auch den Fall abdecken zu können, dass alle D Kanäle benutzt werden sollen.

Werden die übrigen D-C Lautsprechersignale mit einem der C tatsächlich benutzten Audiokanäle kombiniert, so können nicht mehr alle physikalisch richtigen Echopfade getrennt identifiziert werden; dies ist jedoch in diesem Falle nicht notwendig, da sich die Korrelation zwischen direkt miteinander verbundenen Lautsprechern nicht ändern kann.

### Bezugszeichenliste

- 1: Mehrkanal-Audiosignalverarbeitungseinheit
- 2: Adaptives Filter
- 5: Kanalkombinationsvorrichtung
- 6: Puffer
- 7: Transferlogik
- 8: Datenleitung
- 9,10: bidirektionale Busleitung
- 11: unidirektionale Busleitung
- A1, ..., AD: Abzweigleitungen
- L1,..., LD: Lautsprecher
- LK1, ..., LKD: Lautsprecherkanäle
- LS1, ..., LSD: Lautsprecherkanalsignale
- M: Mikrophon
- MK: Mikrophonkanal
- V1,...,VD: Vorverarbeitungseinheiten
- a, b, c: Betriebsphasen
- X, Y: Anzahl von benutzten Kanälen

## Patentansprüche

1. Vorrichtung zur mehrkanaligen akustischen Echokompensation für akustische Schnittstellen, welche umfaßt
- eine Mehrkanal-Audiosignalverarbeitungseinheit (1);
- von der Mehrkanal-Audiosignalverarbeitungseinheit (1) ausgehende D Audiosignalkanäle (LK1, .. LKD);
- wobei einem jedem Audiosignalkanal mindestens ein Lautsprecher (L1, ..., LD) zugeordnet ist;
- wobei von jedem Audiosignalkanal vor dem jeweils zugeordneten mindestens einem Lautsprecher (L1, ..., LD) je eine Abzweigungsleitung (A1, ..., AD) auf ein D-kanaliges adaptives Filter (2) abzweigt;
- ein an das adaptive Filter (2) angeschlossenes Mikrophon (M);
- ein vom adaptiven Filter auf die Mehrkanal-Audiosignalverarbeitungseinheit (1) zurückführender Mikrophonkanal (MK);
- eine Kanalkombinationsvorrichtung (5);
**dadurch gekennzeichnet,**
- **dass** jedem Audiosignalkanal je eine Vorverarbeitungseinheit (V1,..., VD) zugeordnet ist;
- **dass** die Kanalkombinationsvorrichtung (5) zwischen den Vorverarbeitungseinheiten (V1, ..., VD) und den Lautsprechern (L1, ..., LD) angeordnet ist;
- **dass** in der Kanalkombinationsvorrichtung (5) C Lautsprechersignale kombinierbar sind mit C<D, wodurch die verbleibenden D-C Vorverarbeitungseinheiten von den Lautsprechern (L1, ..., LD) entkoppelbar sind; und
- **dass** nur bei C Kanälen des D-kanaligen adaptiven Filters eine adaptive Anpassung aktiviert ist.

2. Vorrichtung nach Anspruch 1,
**gekennzeichnet durch,**
eine Übertragungsstrecke (8) zwischen der Mehrkanal-Audiosignalverarbeitungseinheit (1) und der Kanalkombinationsvorrichtung (5), über die die Zahl C der tatsächlich zu belegenden Kanäle von der Mehrkanal-Audiosignalverarbeitungseinheit (1) auf die Kanalkombinationsvorrichtung (5) übermittelbar ist.

3. Vorrichtung nach Anspruch 1 oder 2,
**gekennzeichnet durch,**
- eine zwischen der Kanalkombiniervorrichtung (5) und dem adaptiven Filter (2) angebrachte und mit diesen jeweils kommunizierende Transferlogik (7), und
- einen mit der Transferlogik (5) kommunizierenden Zwischenpuffer (4).

4. Vorrichtung zur mehrkanaligen akustischen Echokompensation nach Anspruch 3,
**dadurch gekennzeichnet,**
**dass** der Zwischenpuffer eine Speicherkazität für D L für von der Transferlogik übermittelte Filterkoeffizienten aufweist, wobei D die Kanalzahl des Systems und L die Anzahl der Filterkoeffizienten für jeweils einen Kanal bezeichnet.

5. Verfahren zur mehrkanaligen akustischen Echokompensation für akustische Schnittstellen, wobei
- eine Anzahl von D Lautsprecherkanalsignalen jeweils einer Signalvorverarbeitung unterzogen wird, bevor sie auf Lautsprecher (L1, ...;LD) ausgegeben werden,
- die Lautsprecherkanalsignale zusätzlich auf ein D-kanaliges adaptives Filter abgezweigt werden, wo die abgezweigten Lautsprechersignale einer adaptiven Anpassung zur Erzeugung eines Echokompensationssignals unterzogen werden, welches von einem Mikrophonsignal zum Zwecke der Echominimierung abgezogen wird, und die so echominimierten Mikrophonsignale auf eine Mehrkanal-Audiosignalverarbeitungseinheit (1) zur weiteren Verarbeitung und erneuten Ausgabe als Lautsprecherkanalsignale gegeben werden;
**dadurch gekennzeichnet,**
**dass** nach der Signalvorverarbeitung einzelne der D Lautsprecherkanalsignale so kombiniert werden, dass nur noch C < D Kombinationssignale verbleiben, die auf zugeordneten C Lautsprecherkanälen zu D Lautsprechern geführt werden, und dass nur noch diese C Kombinationssignale einer adaptiven Anpassung unterzogen werden.

6. Verfahren nach Anspruch 5, welches als zusätzliche Schritte umfaßt, dass vor einer Veränderung einer Anzahl von X tatsächlich benutzten Kanäle auf Y ≠ X tatsächlich benutzte Kanäle die für die X Kanäle zu einer adaptiven Anpassung zur Erzeugung eines Echokompensationssignals von einem adaptiven Filter (2) bereits identifizierten Filterkoeffizienten zwischengespeichert werden, und nach einer Rückveränderung der Anzahl von den Y Kanälen zurück auf die ursprünglich benutzte Anzahl von X Kanälen die zwischengespeicherten Filterkoeffizienten als Startwerte für die für eine erneute adaptive Anpassung notwendige Neuberechnung von Filterkoeffizienten verwendet werden, um die Konvergenz für die weitere Adaption zu beschleunigen.

## Claims

1. Device for multichannel acoustic echo compensation for acoustic interfaces, said device comprising
- a multichannel audio-signal processing unit (1);
- D audio-signal channels (LK1, ..., LKD) going out from the multichannel audio-signal processing unit (1);
- at least one loudspeaker (L1, ..., LD) being assigned to each audio-signal channel;
- a respective branch line (A1, ..., AD) branching off from each audio-signal channel, before the respectively assigned at least one loudspeaker (L1, ..., LD), to a D-channel adaptive filter (2);
- a microphone (M) connected to the adaptive filter (2);
- a microphone channel (MK) leading back from the adaptive filter to the multichannel audio-signal processing unit (1);
- a channel combining device (5);
**characterized in that**
- a respective preprocessing unit (V1, ..., VD) is assigned to each audio-signal channel;
- the channel combining device (5) is disposed between the preprocessing units (V1, ..., VD) and the loudspeakers (L1, ..., LD);
- C loudspeaker signals can be combined in the channel combining device (5), with C<D, as a result of which the remaining D-C preprocessing units can be decoupled from the loudspeakers (L1, ..., LD); and
- adaptive adjustment is activated only in the case of C channels of the D-channel adaptive filter.

2. Device according to claim 1,
**characterized by**
a transmission path (8) between the multichannel audio-signal processing unit (1) and the channel combining device (5), via which said transmission path the number C of channels that are actually to be occupied can be transmitted from the multichannel audio-signal processing unit (1) to the channel combining device (5).

3. Device according to either of claims 1 or 2,
**characterized by**
- a transfer logic (7), which is disposed between the channel combining device (5) and the adaptive filter (2) and communicates with each of them, and
- a buffer storage (4) which communicates with the transfer logic (5).

4. Device for multichannel acoustic echo compensation according to claim 3,
**characterized in that**
the buffer storage has a storage capacity for D · L for filter coefficients transmitted from the transfer logic, wherein D denotes the number of channels of the system and L denotes the number of filter coefficients for respectively one channel.

5. Method for multichannel acoustic echo compensation for acoustic interfaces, wherein
- a number D of loudspeaker channel signals are each subjected to signal preprocessing before being output to loudspeakers (L1, ..., LD),
- the loudspeaker channel signals are additionally branched-off to a D-channel adaptive filter, where the branched-off loudspeaker signals are subjected to adaptive adjustment for the purpose of generating an echo compensation signal which is subtracted from a microphone signal for the purpose of echo minimization, and the thus echo-minimized microphone signals are supplied to a multichannel audio-signal processing unit (1) for the purpose of further processing and re-outputting as loudspeaker channel signals;
**characterized in that**,
following the signal preprocessing, individual signals of the D loudspeaker channel signals are combined in such a way that only C < D combination signals still remain, said combination signals being supplied to D loudspeakers on assigned C loudspeaker channels, and only these C combination signals still being subjected to adaptive adjustment.

6. Method according to claim 5, said method comprising as additional steps those whereby, before a number X of actually used channels is changed to Y ≠ X actually used channels, the filter coefficients already identified for the X channels by an adaptive filter (2) for the purpose of adaptive adjustment for the purpose of generating an echo compensation signal are buffered and, after the number Y of channels has been changed back to the number X of channels that was used originally, the buffered filter coefficients are used as starting values for the recalculation of filter coefficients that is necessary for a new adaptive adjustment, in order to accelerate the convergence for the further adaptation.

## Revendications

1. Dispositif pour l'annulation d'écho acoustique multicanal pour des interfaces acoustiques, qui comprend
- une unité de traitement de signal audio multicanal (1) ;
- des canaux de signal audio (LK1, ..., LKD) partant de l'unité de traitement de signal audio multicanal (1);
- au moins un haut-parleur (L1, ..., LD) étant attribué à chaque canal de signal audio;
- une ligne de dérivation (A1, ..., AD) partant de chaque canal de signal audio avant le au moins un haut-parleur (L1, ..., LD) respectivement attribué vers un filtre (2) adaptatif à D canaux;
- un microphone (M) raccordé au filtre (2) adaptatif;
- un canal de microphone (MK) provenant du filtre adaptatif à l'unité de traitement de signal audio multicanal (1);
- un dispositif de combinaison de canal (5);
**caractérisé en ce que**
- une unité de prétraitement (V1, ..., VD) est attribuée à chaque canal de signal audio ;
- **en ce que** le dispositif de combinaison de canal (5) est disposé entre les unités de prétraitement (V1, ..., VD) et les haut-parleurs (L1, ..., LD);
- **en ce que**, dans le dispositif de combinaison de canal (5), C signaux de haut-parleur peuvent être combinés avec C < D, les D-C unités de prétraitement restantes pouvant être dissociées des haut-parleurs (L1, ..., LD); et
- **en ce qu'**un ajustement adaptatif est activé uniquement dans le cas de C canaux du filtre adaptatif à D canaux.

2. Dispositif selon la revendication 1,
**caractérisé par** un tronçon de transmission (8) entre l'unité de traitement de signal audio multicanal (1) et le dispositif de combinaison de canal (5), par lequel le nombre C des canaux à occuper réellement peut être transmis de l'unité de traitement de signal audio multicanal (1) au dispositif de combinaison de canal (5).

3. Dispositif selon la revendication 1 ou 2,
**caractérisé par**
- une logique de transfert (7) placée entre le dispositif de combinaison de canal (5) et le filtre (2) adaptatif et communiquant à chaque fois avec ces éléments, et
- un tampon intermédiaire (4) communiquant avec la logique de transfert (5).

4. Dispositif pour l'annulation d'écho acoustique multicanal selon la revendication 3, **caractérisé en ce que**
le tampon intermédiaire présente une capacité de stockage pour D-L coefficients de filtre transmis par la logique de transfert, D désignant le nombre de canaux du système et L le nombre des coefficients de filtre pour respectivement un canal.

5. Procédé d'annulation d'écho acoustique multicanal pour des interfaces acoustiques,
- un nombre de D signaux de canal de haut-parleur étant soumis respectivement à un prétraitement de signal avant qu'ils soient sortis sur des haut-parleurs (L1, ..., LD),
- les signaux du canal de haut-parleur étant déviés en supplément vers un filtre adaptatif à D canaux, où les signaux de haut-parleur déviés sont soumis à un ajustement adaptatif pour générer un signal d'annulation d'écho, qui est soustrait d'un signal de microphone pour la minimisation de l'écho, et les signaux de microphone minimisés ainsi au niveau de l'écho étant sortis sur une unité de traitement de signal audio multicanal (1) pour le traitement ultérieur et la nouvelle sortie sous la forme de signaux de canal de haut-parleur,
**caractérisé en ce que**
après le prétraitement du signal, certains des D signaux de canal de haut-parleur sont combinés de telle sorte que seulement C < D signaux de combinaison restent, lesquels sont guidés sur C canaux de haut-parleur attribués vers D haut-parleurs, et **en ce que** seuls ces C signaux de combinaison sont soumis à un ajustement adaptatif.

6. Procédé selon la revendication 5, qui comprend comme étapes supplémentaires le fait que, avant une modification d'un nombre de X canaux réellement utilisés à Y ≠ X canaux réellement utilisés, les coefficients de filtre déjà identifiés pour un ajustement adaptatif destiné à générer un signal d'annulation d'écho par un filtre (2) adaptatif sont stockés provisoirement et après une modification de retour du nombre des Y canaux au nombre réellement utilisé de X canaux, les coefficients de filtre stockés provisoirement sont utilisés comme valeurs de démarrage pour le nouveau calcul de coefficients de filtre nécessaire pour un nouveau ajustement adaptatif, afin d'accélérer la convergence pour l'ajustement ultérieur.
